# EUROPEAN PATENT APPLICATION

(11) **EP 2 712 884 A1**
(43) Date of publication of application: **02.04.2014**
(21) Application number: 13186079.3
(22) Date of filing: 26.09.2013
(51) Int. Cl.: C08J 5/18, C08L 3/02, C08L 3/04, C08L 3/06, C08L 67/02, C08L 77/00, C08L 101/00

(54) **Starch based polymer blends**

(30) Priority: 26.09.2012 GB 201217207
(71) Applicant: Biome Bioplastics Limited, Marchwood Southampton Hampshire SO40 4BL (GB)
(72) Inventor: Law, Paul, Coventry, Warwickshire CV7 7DW (GB); Longdon, Tony, Swadlincote, Derbyshire DE12 7JZ (GB); Perez, Daniel, Southampton, Hampshire SO15 4NY (GB); Gomis, Maria, Southampton, Hampshire SO17 1DG (GB)
(74) Representative: Wightman, David Alexander

(57) **Abstract**

A starch based polymer blend suitable for extrusion coating, lamination of paper, film, coated or metallised film, foil, and fibrous webs comprises starch in the range 10% to 60% by weight of the polymer blend, one or more further carrier polymers in the range 40% to 90% by weight of the polymer blend, and optionally one or more process aids in the range 0% to 0.1% by weight of the polymer blend wherein the polymer blend has a melt flow index of at least 10 g/10min (5kg, 190C).

## Description

This invention relates to starch based polymer blends containing starch and applications and processes employing such blends, especially extrusion coating and laminating with starch based polymer blends.

Recent years have seen an accelerating trend in the commercial use of bio-resins across a wide range of products. This growth has been driven by a range of factors. With petrochemical based polymers likely to be more limited and expensive in coming years, the availability of materials based on sustainable, renewable resources is a key factor. For disposable products such as packaging ease of disposal via a range of routes, including composting and anaerobic digestion, is another important advantage over traditional materials.

Application areas for bio-resins which are particularly attractive are as an extrusion hot melt coating on a continuous substrate e.g. paper and film, or similarly as a hot melt laminating adhesive extruded to bond together two outer substrates e.g. two layers of paper, film, coated and metallised films, foil, fibrous webs or combinations thereof. When applied to paper, film or other substrates the bio-resin coating can provide a grease, moisture, or solvent proof coating that protects the underlying substrate. The coating may also confer gas barrier properties to the overall structure. Moreover, where the substrate is biodegradable, and/or compostable the coating layer can preserve the biodegradability of the total structure, allowing disposal via a composting method for example, after the product has carried out its function. This contrasts with a conventional polyolefin or other petrochemical based polymer coating, where the coated substrate or laminate will not biodegrade in a sensible timeframe. Such properties can be particularly useful in, for example, packaging. A further useful attribute of the hot melt coating is that it can confer good heat sealing characteristics to materials such as paper, which ordinarily will not heat seal well.

Whilst coating or lamination using conventional polyolefin and other resins is well established, more recently developed bio-resins present some challenges. In order to be suitable for high speed coating and lamination applications a bio-resin must possess a number of characteristics: good melt strength, relatively low shear and elongational viscosity to allow a thin coating film to be drawn down at acceptable extrusion pressures, resistance to thermal degradation in processing, good adhesion to the substrate(s) etc. In the case of starch-containing bio-resins, achieving these characteristics presents particular challenges.

Commercial starch-containing bio-resin formulations have been developed for some years. Typically these consist of a blend of corn or potato starch with one or more additional "carrier" biodegradable polymers, and in some cases a mixture of low molecular weight plasticisers such as glycerol and sorbitol. The latter adjust (lower) the viscosity of the system, and plasticise the starch component to provide good dispersion with the other polymers present. The biodegradable polymers added to the starch include aliphatic and aromatic polyesters (e.g. polybutylene succinate, PBS, polybutylene succinate adipate PBSA), linear and branched aliphatic/aromatic copolyesters such as polybutylene adipate terephthalate (PBAT e.g. Ecoflex resins as produced by BASF), polyhydroxy alkanoates (PHAs, e.g. poly-3-hydroxy butyrate, poly-3-hydroxy butyrate valerate), biodegradable polyamides, polycaprolactone PCL, etc.

One drawback of such resins is that the starch component confers rather high viscosity, which means that high extruder pressures arise in trying to process these resins at the high speeds, effectively limiting the speeds achievable on the coating machine. High speeds are required in extrusion coating and laminating processes for economic efficiency. Whilst some companies add plasticiser systems as noted above, which can reduce viscosities significantly, such plasticisers are high boiling liquids and can cause significant fuming and condensation in coating processes, which is undesirable from health and safety and processing points of view. A common way to lower the viscosity of polyolefin resins would be to increase the temperature in the extruder and die. However, due to their thermal sensitivity, the scope for increasing the temperature of bio-resins is usually limited, so this is not a useful route to lowering processing pressures.

Another aspect of these resins is that they are usually compounded with one or more additives designed for lubrication. Typical additives might include long chain fatty acid esters and amides, long chain fatty acids, waxes etc. Such additives can reduce extrusion pressures by internal and external lubrication mechanisms, but at normal addition levels their low surface energy may lead to poor adhesion to coating or lamination substrates.

The current invention relates to starch containing resins that aim to address the above problems. The current invention aims to provide a starch-containing bio-resin formulation with good coating, laminating, and end-use characteristics.

This may broadly be achieved according to one aspect of the invention by biodegradable polymer blends containing starch, a further carrier polymer and optionally one or more process aids having reduced viscosities by formulation changes. In particular, one or more of the following may be employed:
- using lower viscosity carrier polymer resins, either alone or in blends with other, higher viscosity carrier resins, the latter offering better retention of mechanical properties where required.
- using lower levels of starch in the formulated polymer, which has the effect of reducing overall viscosity.
- using lower molecular weight, or lower viscosity starch. This can include different starch types (e.g. pea starch, tapioca starch), hydrolysed starches with lower molecular weights, or other chemically modified starches and starch derivatives.

By this aspect of the invention, the blended resin shows an advantageous series of properties for use as an extrusion coating or extrusion lamination resin, for coating or laminating papers, films, coated or metallised films, foils, and other substrates such as fibrous webs. In particular the resin(s) offer
- good melt strength combined with shear and elongational viscosity that are not excessive, allowing high extrusion rates, lower extrusion pressures, and low coating weights to be achieved.
- good adhesion to coated and laminated substrates.

The following terms as used herein are understood to have the following meanings unless the contrary is indicated
- A process aid is understood to mean a material which acts as an "external" lubricant to the polymer mass, reducing friction at polymer-metal interfaces, reducing any tendencies to melt fracture effects, or to excessive melt adhesion to the surfaces of elements of the processing equipment. Examples of such materials can include fluorocarbon based additives, or conventional fatty acid derived lubricants. Thus, under this definition a process aid is distinct from a compatibilising agent. The latter is typically added in higher amounts to improve miscibility of blended polymers.
- A plasticiser is understood to mean a material or mixture of materials added to a polymer or polymer blend to confer additional fluidity and or plasticity. Typically such plasticisers are fairly low molecular weight molecules which lie between the long chain polymer molecules, separating them and increasing polymer mobility. The range of available plasticisers is wide, but typical plasticisers include glycerol, sorbitol, low molecular weight phthalates (e.g. diethyl phthalate), esters (e.g. citrates, adipates) etc. Whilst conferring improved fluidity to the polymer melt and flexibility to the finished product plasticisers suffer a number of drawbacks, including volatility, which affects processing, and a tendency to exudation which can lead to "greasiness" and poor surface adhesion properties in products.
- A lower viscosity carrier polymer is understood to mean a polymer having sufficient melt strength to undergo high levels of melt elongation during an extrusion process, but to have a low enough viscosity to avoid excessive pressures during the high throughput in a coating/lamination process.
- A lower viscosity starch is understood to mean starch which has been modified such that the molecular weight of the (modified) starch is reduced in comparison with the native starch it was derived from.

Starch is a natural, plant based polymer which consists of a mixture of polymeric glucose molecules, some linear (amylose) and some highly branched (amylopectin). Normally the amylopectin share predominates. The origin of the starch will influence its viscosity characteristics, via molecular weight, polydispersity, and amylose/amylopectin blend. Starch polysaccharide molecules can also be modified. For example controlled hydrolysis can give rise to lower molecular weight and correspondingly lower viscosity. Chemical derivitisation, for example into starch esters (e.g, starch acetate) and starch ethers, can also modify and reduce the viscosity characteristics of the material.

It may be that the starch is "native" potato, corn, pea, tapioca, rice or other starches. The starch may have differing ratios of amylose to amylopectin components, such that the resulting polymer blend shows improved low viscosity characteristics. The starch may be a chemically treated starch or starch derivative of relatively low viscosity, for example chemically treated starches would be oxidised or acid hydrolysed starches. The starch component may consists partially or wholly of a chemically derivatised starch, such as starch esters (e.g. starch acetate), starch ethers, etc.

It may be that the lower viscosity starch is a starch type where the Brabender viscosity is typically 20% or more lower than the Brabender viscosity of the native, unmodified starch. A typical technique for measuring the Brabender viscosity is the so-called Brabender visco-amylograph. For example a 5% starch/water (w/w) mixture is stirred whilst the temperature is raised from the room temperature to 90/95°C at a controlled rate of 1.5°C /min, and then subsequently cooled. The instrument measures the change in resistance (torque) as the starch "cooks", in so-called Brabender units. The peak torque recorded is one measure of the starch's viscosity.

The carrier polymer(s) typically possess sufficient melt strength to undergo high levels of melt elongation during an extrusion process, but have a low enough viscosity to avoid excessive pressures during the high throughput in a coating/lamination process. A lower viscosity carrier polymer for the present invention might have a melt flow index in the range 20-40 g/10min (190C, 5.0kg).

It may be that the carrier polymer(s) include aliphatic, aromatic, and linear and branched aromatic/aliphatic copolyesters, and polyamides. In particular such carrier resins, or blends thereof, include PBS, PBSA, PHB, PHBV, PHBH (polyhydroxy butyrate co-hexanoate), PCL, and preferably PBAT, most preferably branched PBAT copolyesters such as Ecoflex, produced by BASF.

It may be that one or more of the carrier resins has a relatively low molecular weight/viscosity, with the effect of reducing the overall viscosity/processing pressure of the formulated resin. A particular example would be the use of Ecoflex PBX 7020 PBAT resin (low viscosity) either alone or in combination with Ecoflex SBX 7025 PBAT resin (higher viscosity).

It may be that the polymer blend has a melt flow index of at least 10 g/min (5kg, 190C) and more preferably at least 15 g/min (5kg, 190C).

It may be that the resin blend is biodegradable, and preferably compostable according to EN13432 and ASTM D6400.

It may be that the starch content of the resin lies between 10% and 60% w/w of the resin system, preferably between 20% and 50% w/w of the resin system, more preferably between 25% and 45% w/w of the resin system and most preferably between 25% and 40% w/w of the resin system.

It may be that the carrier polymer(s) is present in the range 40% to 90% by weight of the resin system, preferably 50% to 80% by weight of the resin system, more preferably 55% to 75% by weight of the resin system and most preferably between 60% and 75% by weight of the resin system.

It may be that the starch comes from waste starch from a food processing or other process. In particular this may allow the use of a waste starch foodstuff as a potential packaging material.

It may be that the resin contains no added process aid. This has surprisingly been found to have the effect of increasing the adhesion levels of the resin blend to the substrate significantly, preferably resulting in 180° peel bond strength in excess of 1000g/25mm.

Alternatively, it may be that the resin contains a much reduced level of process aid compared with standard thermoplastic formulations. Surprisingly such blends have been found to show improved adhesion to a range of substrates compared with normal formulations. Suitable process aids include calcium, magnesium, and zinc stearates, fatty acid esters and amides, and fatty acid esters of polyhydric alcohols, preferably pentaerythritol fatty acid esters, and most preferably glycerol monostearate. Addition levels may be in the 0.01-0.5% w/w, more preferably 0.01-0.1% w/w and most preferably in the range 0.02 to 0.05% w/w.

It may be that the resin contains no plasticiser.

It may be that the resin can be used for hot melt extrusion coating or extrusion lamination applications. It may be that in thermoplastic extrusion coating or lamination applications, the coated or laminated substrates include paper, film, coated or metallised film, foil, and fibrous webs.

It may be that the resin provides improvements to the substrate(s) in respect of chemical resistance (water, oil and grease, solvents), mechanical properties (tensile and tear strength), gas barrier, biodegradability.

It may be that the resin can be drawn down to a desired coating thickness, typically from 100µm down to 5µm.

It may be that the resin can also be used in other thermoplastic applications including blown film, blow moulding, injection moulding, tube extrusion, sheet extrusion, film casting and thermoforming.

It may be that the product is food contact approved.

According to another aspect of the invention improved adhesion is provided between a coating/laminating resin and a substrate(s) by changing the lubricant additives added to the coating/laminating resin. In particular, one or more of the following may be employed:
- omitting the typical lubricant additive(s) completely, or reducing the level used to a fraction of the level that would typically be used in the resin formulation.
- replacing the resin lubricant with an alternative lubricant, at a normal level, or preferably a much reduced level of addition. In particular calcium, magnesium and zinc stearates, sorbitan monostearate and glycerol monostearate (GMS), phospholipids (e.g. lecithin) and fluorocarbon based process aids have been found to be particularly effective in improving adhesion at low loading levels, whilst not increasing resin viscosity and thus processing pressures.

According to yet another aspect of the invention, thermoplastic polymer blend(s) are provided consisting of starch, and one or more further carrier polymers, and optionally one or more further process aids for use as an extrusion coating or extrusion lamination resin, for coating or laminating papers, films, coated or metallised films, foils, and other substrates such as fibrous webs.

According to a further aspect of the invention, waste starch from food processes is incorporated into coating and laminating resins. This allows the possibility of a food processer's waste being incorporated, for instance, in the packing of the food processor's product.

According to another aspect of the invention, adhesion to a substrate may be further improved by the addition of adhesion promoting materials. These include starch derivatives such as dextrins, functionalised dextrins, and other starch derivatives as well as non-starch derivatives including titanate and zirconate adhesion promoters, organosilanes, and sucrose acetoisobutylene (SAIB). Such adhesion promoting materials are effective at loadings of 0-5%w/w.

The invention will now be described with reference to the example formulations in the following Table and the accompanying drawings in which
**Figure 1** shows an extrusion coating process: and
**Figure 2** shows a T peel bond strength test

In the table below, examples 1 to 7 are formulations in accordance with the present invention and example 8 is a formulation not in accordance with the present invention for comparison.

| **Example→** | **Unit** | **1** | **2** | **3** | **4** | **5** | **6** | **7** | **8** |
|---|---|---|---|---|---|---|---|---|---|
| **Raw material** ↓ | | | | | | | | | |
| Native starch (potato) | (% w/w) | 25 | | | | | | 22 | 30 |
| Native starch (tapioca) | (% w/w) | | 25 | | 36 | | | | |
| Acid hydrolysed starch | (% w/w) | | | 34 | | 25 | 45 | | |
| Starch ester | (% w/w) | | | | | | | 3 | |
| PBAT | (% w/w) | | | | | | | | 69 |
| Low viscosity PBAT | (% w/w) | 75 | 75 | 65.95 | 63.98 | 74.95 | 54.98 | 74.98 | |
| Glycerol monostearate lubricant * | (% w/w) | | | 0.05 | | | | | |
| Oleamide + | (% w/w) | | | | | | | | 1 |
| Fluorocarbon lubricant * | (% w/w) | | | | 0.02 | | 0.02 | 0.02 | |
| Phospholipid lubricant * | (% w/w) | | | | | 0.05 | | | |
| | | | | | | | | | |
| Melt flow index (5kg, 190C) ∼ | (g/10min) | 15.1 | 15.7 | 16.6 | 15.1 | 19.2 | 12.4 | 15.0 | 6.6 |
| Film surface tension # | mN/m | 46 | >46 | >44 | 44 | 46 | 44 | >50 | 35 |
| Fibre tear (as coating on paper) | | ✔✔✔ | ✔✔✔ | ✔✔ | ✔✔✔ | ✔✔✔ | ✔ | ✔✔✔ | **×××** |
| Tensile strength (Machine Direction)** | MPa | 22.3 | 21.0 | 19.8 | 20.4 | 19.5 | 22.6 | 20.6 | 27.5 |
| Elongation at break (Machine Direction)** | % | 550 | 535 | 375 | 465 | 555 | 320 | 355 | 455 |

| | | | | | | | | | |
|---|---|---|---|---|---|---|---|---|---|
| * process aid + plasticiser/compatibiliser - measured based on the test method described in standards ISO 1133 (2011) and ASTM D1238 # measured based on the ISO 8296 method for measuring surface energy of polyethylene film ** measured according to ASTM D-882-12 (standard test method for tensile properties of thin plastic sheeting ✔✔✔ = good fibre tear **×××**= no fibre tear | | | | | | | | | |

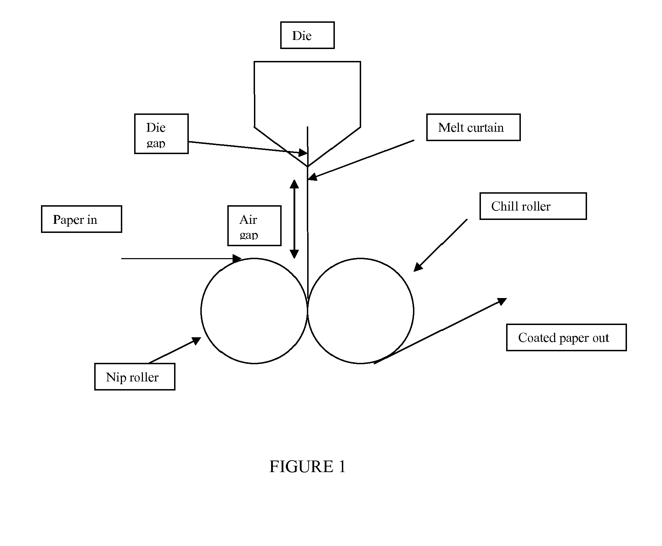

The formulations were mixed in a co-rotating twin screw compounder. The materials according to the invention (examples 1 to 7) showed good melt strength: gave a stable bubble when blown as a film. In particular, when extruded through a linear die and drawn down into a nip onto a paper substrate (see Figure 1) the melt curtain showed excellent stability: the melt curtain was capable of drawing down 80x in thickness, and at an elongation draw rate in the die "air gap" -200 times per second and higher without rupture, and with good edge stability. Neck-in for a 2.0m wide melt curtain was <10cm, and edge stability was good i.e. there was very little movement at the edges of the melt curtain.

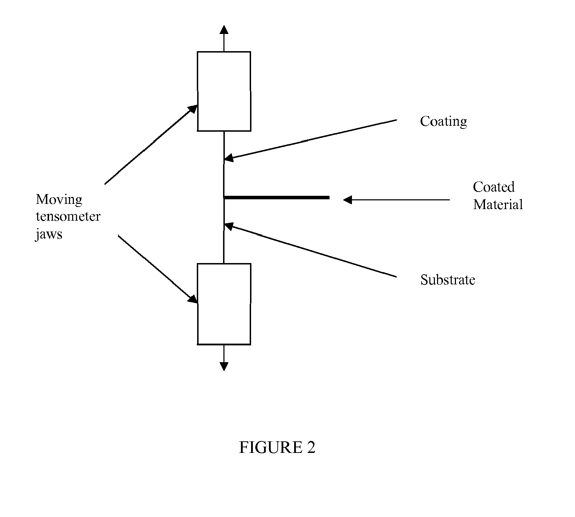

When coated onto an 80gm⁻² Kraft paper adhesion was good: T peel bond strength determinations showed failure by fibre tear. When coated onto 20µm PLA film 180 degree peel bond strengths were measured at 500g up to >1000g per 25mm wide strip of coated material: a commercially desirable level of adhesion. The T peel bond test involves taking a coated sample specimen 25mm in width, and carefully separating the coating and the substrate with a sharp razor (or by inserting a thin PTFE sheet between coating and substrate during the coating process to create a non bonded area that can be peeled back). The separated coating and substrate are mounted in opposite jaws of a tensometer, and the coated bond is unpeeled (see Figure 2) at 200mm/minute. The mean force in peeling apart the substrate and coating is the T peel bond strength, usually measured in g/25mm. In contrast the material not according to the invention (example 8) coated well but showed very low adhesion to the substrates, both paper and PLA film. Peel bond strengths were <100g/25mm.

Surface energy also referred to as surface tension was tested using a conventional dyne test pen (to ISO 8296). Dyne pens are very widely used within the printing industry for measuring surface energy and consist of a series of liquid solutions, chosen so that they possess different levels of surface tension. A typical series of solutions might cover surface tension ranges from 30, 32, 34...48 mNm⁻¹. A solution of a known surface tension is spread onto the test substrate. If the surface energy of the test substrate is greater than the surface tension of the liquid then the liquid will spread as a continuous layer on the test substrate and "wet-out" the surface. If the liquid does not wet-out the surface, but reticulates into droplets, then the surface energy of the test substrate is less than the surface tension of the liquid. By testing with a series of solutions the surface energy of the test substrate can be identified, typically to about ±1 mNm⁻¹. As can be seen from the Table, the formulation according to the invention (examples 1 to 7) having no or only a small amount of process aid all produce a film material having a surface energy of at least 44 mN/m. In contrast, the comparative formulation (example 8) having a conventional amount of plasticiser/compatibiliser produces a film material having a surface energy of 35 mN/m, a reduction in surface energy of about 25% compared to the formulations according to the invention.

Melt Flow Index was measured according to ISO 1133, using a Davenport MFI-10 machine. Approximately 6g of polymer were loaded into the instrument, and extruded at 190C under a load of 5kg through a standard die (2.095mm x 8.0mm) to determine the melt flow index data. Mass was determined manually.

Advantages, benefits and uses of polymer blends according to the invention include
- good melt strength combined with shear and elongational viscosity allowing high extrusion rates, lower extrusion pressures, and low coating weights to be achieved.
- good adhesion to coated and laminated substrates
- use for hot melt extrusion coating or extrusion lamination applications.
- use in thermoplastic extrusion coating or lamination wherein the coated or laminated substrates include paper, film, coated or metallised film, foil, and fibrous webs.
- blending to provide more of chemical resistance (water, oil and grease, solvents), mechanical properties (tensile and tear strength), gas barrier, biodegradability are provided.
- drawing down to a desired coating thickness, typically for 100µm down to 2µm.
- use for thermoplastic applications including blown film, blow moulding, injection moulding, tube extrusion, sheet extrusion, film casting and thermo forming.
- suitable for direct food contact.

The invention is not limited to the exemplary examples and the full scope of the invention is defined in the claims.

## Claims

1. A polymer blend(s) comprising starch in the range 10% to 60% by weight of the polymer blend, one or more further carrier polymers in the range 40% to 90% by weight of the polymer blend, and optionally one or more process aids in the range 0% to 0.5% by weight of the polymer blend wherein the polymer blend has a melt flow index of at least 10 g/10min (5kg,190C).

2. A blend according to claim 1 wherein the starch is a low viscosity starch and/or the one or more of the carrier polymers is a low viscosity polymer.

3. A blend according to any preceding claim wherein the one or more carrier polymers is selected from the group comprising aliphatic, aromatic, and linear and branched aromatic/aliphatic copolyesters, and polyamides, for example carrier resins, or blends thereof, include PBS, PBSA, PHB, PHBV, PHBH, PCL, and PBAT.

4. A blend according to any preceding claim wherein the one or more process aids is selected from the group of materials comprising calcium, magnesium, and zinc stearates, fatty acid esters and amides, and fatty acid esters of polyhydric alcohols, fluorocarbon based process aids and phospholipids.

5. A blend according to any preceding claim wherein the polymer blend is biodegradable and/or compostable according to EN13432 and ASTM D6400.

6. A blend according to any of the preceding claims wherein the starch content of the polymer blend lies between 20% and 50% w/w of the polymer blend, preferably between 25% and 45% and most preferably between 25% and 40%.

7. A blend according to any of the preceding claims wherein the carrier polymer is present in the range 50% to 80% by weight, preferably 55% to 75% and most preferably between 60% and 75%.

8. A blend according to any of the preceding claims wherein the blend contains no added process aid.

9. A blend according to any of claims 1 to 7 wherein the polymer blend contains one or more process aids in the range 0.01% to 0.5% w/w of the polymer blend, preferably 0.01 % to 0.1 % w/w and most preferably 0.02% to 0.05% w/w.

10. A blend according to any of the preceding claims wherein the blend contains no plasticiser.

11. A blend according to any preceding claims wherein adhesion of the polymer blend to a substrate has a 180° peel bond strength in excess of 1000g/25mm.

12. A method of extrusion coating or laminating a substrate employing a polymer blend comprising starch in the range 10% to 60% by weight of the polymer blend, one or more further carrier polymers in the range 40% to 90% by weight of the polymer blend, and optionally one or more process aids in the range 0% to 0.1% by weight of the polymer blend wherein the polymer blend has a melt flow index of at least 10 g/10min (5kg, 190C).

13. The method according to claim 12 wherein the polymer blend comprises starch in the range 25% to 45% by weight of the polymer blend and one or more carrier polymers in the range 55% to 75% by weight of the polymer blend.

14. The method claim 12 or claim 13 wherein the polymer blend comprises one or more process aids in the range 0.01 % to 0.1 %.

15. The method according to any of claims 12 to 14 wherein the substrate is selected from paper, film, coated or metallised film, foil, and fibrous webs.
